# EUROPEAN PATENT APPLICATION

(11) **EP 1 614 739 A1**
(43) Date of publication of application: **11.01.2006**
(21) Application number: 04717744.9
(22) Date of filing: 05.03.2004
(51) Int. Cl.: C10G 45/10, C10G 45/44, C10G 65/04, B01J 23/44, B01J 29/12

(54) **METHOD OF HYDROTREATING GAS OIL FRACTION**

(30) Priority: 07.03.2003 JP 2003062352
(71) Applicant: Nippon Oil Corporation, Tokyo 105-8412 (JP)
(72) Inventor: IKI, Hideshi, c/o Nippon Oil Corporation, Yokohama-shi, Kanagawa 231-0815 (JP); SUGIURA, Yukihiro, c/o Nippon Oil Corporation, Yokohama-shi, Kanagawa 231-0815 (JP); TANAKA, Yuichi, c/o Nippon Oil Corporation, Yokohama-shi, Kanagawa 231-0815 (JP)
(74) Representative: Grünecker, Kinkeldey, Stockmair & Schwanhäusser Anwaltssozietät
(86) International application number: PCT/JP2004/002784
(87) International publication number: WO 2004/078887

(57) **Abstract**

The gas oil fraction hydrotreatment process of the invention is **characterized by** using a hydrorefined petroleum-based hydrocarbon oil with a sulfur content of 5-15 ppm by mass, a total aromatic content of 10-25 % by volume and a boiling point range of 150-380°C as the feed oil and subjecting the feed oil to hydrotreatment in the presence of a hydrogenation catalyst to obtain an ultralow sulfur and low aromatic gas oil fraction having a sulfur content of not greater than 1 ppm by mass and a total aromatic content of not greater than 1 % by volume. This hydrotreatment process allows production of a "zero sulfur" and "zero aromatic" gas oil fraction in an efficient and reliable manner without provision of special operating conditions or equipment investment.

## Description

### Technical Field

The present invention relates to a gas oil fraction hydrotreatment process.

### Background Art

Demand for cleaner diesel vehicle exhaust gas is becoming increasingly acute in light of issues such as environmental pollution. This has led to adoption of various kinds of environmental regulations, notable among which is regulation regarding the removal of "particulate matter", or fine particles in exhaust gas, and therefore installation of particulate matter removing filters and the like has come to be considered essential.

However, such exhaust gas after-treatment devices have been shown to undergo considerable deterioration when using high-sulfur gas oil. It is therefore highly desirable to maximize the usable life of purification devices, especially for transport trucks which must traverse long running distances, and as a result it has become indispensable to further reduce the sulfur content of gas oil. In addition, it is said that since the aromatic components of gas oil are the major cause of particulate matter production, removal of the aromatic components is effective as a strategy for fundamentally reducing particulate matter. Moreover, since aromatic components are widely recognized as being carcinogenic, when gas oil fractions are used as bases for various solvents or metal working oils there is a risk of worsening of the working environment during handling of solvents, and therefore reduction of aromatic components is also important from this viewpoint.

On the other hand, petroleum-based gas oil fractions contain 1-3 % by mass sulfur when unrefined, and they are used as gas oil stocks after hydrodesulfurization. Other gas oil stocks include the hydrodesulfurized kerosene fraction and cracked gas oil obtained from a fluidized catalytic cracker or hydrocracker unit, and gas oil products are obtained by admixture with such fuel stocks. Among the sulfur compounds present in gas oil fractions which have been hydrodesulfurized with a hydrodesulfurization catalyst, dibenzothiophene derivatives with methyl substituents, such as 4,6-dimethyldibenzothiophene, have very low reactivity and such compounds tend to remain to the end of the process even in the case of hydrodesulfurization to a high depth. Consequently, in order to promote desulfurization to an even lower sulfur content of not greater than 1 ppm by mass by the prior art technology, it is necessary to employ a very high hydrogen partial pressure or to achieve an extremely long contact time, i.e., using an extremely large catalyst volume.

Also, unrefined petroleum-based gas oil fractions generally contain 20-40 % by volume of aromatic components, which may exist as monocyclic aromatic compounds or bicyclic or greater condensed aromatic compounds. Furthermore, a chemical equilibrium restriction applies in the aromatic hydrogenation reaction, with the equilibrium shifting to aromatic compounds at the high temperature and cyclic hydrides (naphthenes) at the low temperature. As a result, the lower temperature is favorable for hydrogenation of aromatics, but serious problems remain in that reaction at low temperature requires reaction conditions and a catalyst which will produce a sufficient aromatic hydrogenation reaction rate at the low temperature. Noble metal catalysts are catalysts which exhibit sufficient aromatic hydrogenation activity at low temperature, but the sulfur resistance of such catalysts is not satisfactory, and in cases with a high sulfur content of the feed oil, the hydrogenation activity of the catalyst is inhibited and sufficient aromatic hydrogenation power is not exhibited. However, since hydrodesulfurization reaction is a reaction which eventually ends in cleavage of carbon-sulfur bonds, the reaction is promoted more toward the high temperature. Consequently, setting the reaction conditions to the low temperature to promote aromatic hydrogenation as by prior art techniques results in inadequate desulfurization activity, such that it is difficult to achieve both an ultralow sulfur content and low aromatic content.

In light of these circumstances, methods for production of low-sulfur and low-aromatic component diesel fuels have been proposed, such as the production techniques which combine two steps, a desulfurization step (first step) with an aromatic-hydrogenation step employing zeolite or a clay mineral as the catalyst (second step), described in Japanese Unexamined Patent Publication HEI No. 7-155610 and Japanese Unexamined Patent Publication HEI No. 8-283747.

### Disclosure of the Invention

However, the effects of reducing the sulfur content and aromatic components by the methods described in the aforementioned publications have been insufficient, and it has not been possible to simultaneously achieve an extremely high desulfurization/dearomatization level to a sulfur content of not greater than 1 ppm by mass and an aromatic content of not greater than 1 % by volume. Specifically, when the degree of severity of the operation in the first step is increased, problems result in that the operation of the first step can no longer be carried out for a period which is satisfactory in economic terms, the aromatic components in the product oil are increased in the first step as a result of the rising reaction temperature, and dearomatization in the second step is inhibited. In addition, the degree of severity of operation has been limited because of the aforementioned aromatic equilibrium restriction in the second step.

It is an object of the present invention, which has been accomplished in light of the problems of the prior art described above, to provide a gas oil fraction hydrotreatment process which allows production of a "zero sulfur" and "zero aromatic" gas oil fraction having a sulfur content of not greater than 1 ppm by mass and a total aromatic content of not greater than 1 % by volume, and with excellent environmental properties, in an efficient and reliable manner without provision of special operating conditions or equipment investment.

As a result of much diligent research directed toward achieving the object stated above, the present inventors have completed the present invention upon discovering that an ultralow sulfur content and low aromatic content can be efficiently and simultaneously achieved by hydrotreatment of a hydrorefined petroleum-based hydrocarbon oil, corresponding to the diesel oil fraction and having a sulfur content, total aromatic content and boiling point range in prescribed ranges, in the presence of a hydrogenation catalyst.

Namely, the invention provides a gas oil fraction hydrotreatment process characterized by using a hydrorefined petroleum-based hydrocarbon oil with a sulfur content of 5-15 ppm by mass, a total aromatic content of 10-25 % by volume and a boiling point range of 150-380°C as the feed oil and subjecting the feed oil to hydrotreatment in the presence of a hydrogenation catalyst to obtain an ultralow sulfur and low aromatic gas oil fraction having a sulfur content of not greater than 1 ppm by mass and a total aromatic content of not greater than 1 % by volume.

The invention also provides an ultralow sulfur and low aromatic gas oil fraction having a sulfur content of not greater than 1 ppm by mass and a total aromatic content of not greater than 1 % by volume, characterized by being obtained by the aforementioned process of the invention.

The invention further provides a gas oil composition characterized by comprising an ultralow sulfur and low aromatic gas oil fraction having a sulfur content of not greater than 1 ppm by mass and a total aromatic content of not greater than 1 % by volume, obtained by the aforementioned process of the invention.

The present inventors have discovered that in order to simultaneously achieve a sulfur content of not greater than 1 ppm by mass and a total aromatic content of not greater than 1 % by volume for a petroleum-based hydrocarbon oil corresponding to the gas oil fraction, it is highly effective to accomplish hydrotreatment of a hydrorefined oil as the feed oil, wherein the hydrorefining is to a sulfur content of 5-15 ppm by mass and a total aromatic content of 10-25 % by volume, thereby allowing both desulfurization and dearomatization to be achieved to an ultra-deep degree, with desulfurization to a sulfur content of not greater than 1 ppm, even when reaction is conducted at low temperature to favor production of cyclic hydrides (naphthenes) to a total aromatic content of 1 % by volume or lower.

According to the invention, the reaction conditions for the hydrotreatment are preferably a reaction temperature of 170-320°C, a hydrogen partial pressure of 2-10 MPa, a liquid hourly space velocity of 0.1-2 h⁻¹ and a hydrogen/oil ratio of 100-800 NL/L. By carrying out hydrotreatment at low temperature in this manner, it is possible to extend the life of the catalyst and allow its use for prolonged periods for stable operation. An economic advantage is also provided due to reduced catalyst exchange and equipment downtime periods.

According to the invention, (i) preferably the feed oil has a monocyclic aromatic content of 9-18 % by volume and a bicyclic or greater aromatic content of 1-7 % by volume, while the ultralow sulfur and low aromatic gas oil fraction has a bicyclic or greater aromatic content of not greater than 0.2 % by volume, and (ii) preferably the feed oil has a paraffin content of 30-60 % by volume and a naphthene content of 25-60 % by volume, while the ultralow sulfur and low aromatic gas oil fraction has a paraffin content of 30-60 % by volume and a naphthene content of 40-70 % by volume.

The hydrogenation catalyst used for the invention is preferably one having at least one type of active metal from among Group 8 metals supported on a porous support, and more preferably (i) the porous support is composed of alumina and at least one substance selected from the group consisting of titania, zirconia, boria, silica, phosphorus and zeolite, and/or (ii) the active metal is at least one type of metal selected from the group consisting of Ru, Rd, Ir, Pd and Pt.

### Best Mode for Carrying Out the Invention

Preferred embodiments of the invention will now be explained in detail.

According to the invention, a hydrorefined petroleum-based hydrocarbon oil with a sulfur content of 5-15 ppm by mass, a total aromatic content of 10-25 % by volume and a boiling point range of 150-380°C is used.

The hydrorefining for production of feed oil with the aforementioned prescribed properties, and the petroleum-based hydrocarbon oil to be supplied for hydrorefining (hereinafter referred to as "primary feed oil") will be explained first.

The primary feed oil to be hydrotreated is a fraction corresponding to a prescribed boiling point range obtained from an atmospheric pressure distillation apparatus, but there may also be used a mixture of fractions with corresponding boiling point ranges obtained from a hydrocracker and resid hydrodesulfurization unit. In addition, a kerosene fraction and diesel fraction in a prescribed boiling point range may be mixed after separate hydrorefining. Also, the gas oil-corresponding fractions obtained from a fluidized catalytic cracker (FCC) may be combined and supplied for hydrorefining, but since the gas oil-corresponding fractions from FCC have greater aromatic contents than each of the aforementioned separate fractions, the mixing proportion is preferably not greater than 40 % by volume and even more preferably not greater than 30 % by volume.

The primary feed oil hydrorefining conditions may be the same conditions as for treatment using an ordinary hydrorefining apparatus for petroleum refinement. That is, in most cases it is preferably carried out under conditions with a reaction temperature of 250-380°C, a hydrogen partial pressure of 2-8 MPa, a liquid hourly space velocity (LHSV) of 0.3-10.0 h⁻¹ and a hydrogen/oil ratio of 100-500 NL/L. For hydrorefining of primary feed oil, the kerosene fraction and diesel fraction are separated beforehand in an atmospheric pressure distillation apparatus, and are then combined for use as the feed oil. The catalyst used for hydrorefining of the primary feed oil may be a common hydrodesulfurization catalyst. Specifically, sulfides of Group 6A and Group 8 metals are ordinarily used as active metals, and as examples there may be mentioned Co-Mo, Ni-Mo, Co-W and Ni-W. The support used may be a porous inorganic oxide composed mainly of alumina. The reaction conditions and catalyst employed for hydrorefining of the primary feed oil are not particularly restricted so long as the properties of the obtained feed oil satisfy the aforementioned conditions.

There are no particular restrictions on the constructions of the different apparatuses for primary feed oil hydrorefining and the feed oil hydrotreatment, or the combination therefore as a group of apparatuses, but it is preferred to maximally remove hydrogen sulfide in the product obtained by the hydrorefining, using a gas-liquid separation column or prescribed hydrogen sulfide removing equipment. With ordinary diesel or kerosene desulfurization equipment, the gas and liquid are separated by a gas-liquid separation column after desulfurization with a reactor. If the separated liquid fraction is used as the feed oil, the hydrogen sulfide content will be extremely low and it will be suitable as feed oil for the invention. However, the present invention can be carried out even if hydrogen sulfide is present, so long as the hydrotreatment conditions are appropriately determined.

Feed oil having prescribed properties for use according to the invention will now be explained. The feed oil for the invention is obtained by hydrorefining of the aforementioned primary feed oil, and it has a sulfur content of 5-15 ppm by mass, a total aromatic content of 10-25 % by volume and a boiling point range of 150-380°C.

Thus, the feed oil used for the invention has a boiling point range of 150-380°C, but a kerosene fraction with a boiling point range of 150-240°C and a diesel fraction with a boiling point range of 200-380°C may be combined after separate hydrorefining. The separation temperatures for kerosene and diesel varies for different products depending on shifts in supply and demand or the distillation apparatus properties, etc., and the separation temperatures are not particularly restricted to the temperatures mentioned above. Incidentally, the "boiling point range" throughout the present specification is the value measured according to the method described in JIS K 2254, "Petroleum products - Determination of distillation characteristics".

The sulfur content of the feed oil used for the invention is 5-15 ppm by mass and preferably 5-10 ppm by mass. If the sulfur content of the feed oil is greater than 15 ppm by mass, the activity of the hydrogenation catalyst is reduced and the desulfurization reaction and aromatic hydrogenation reaction do not proceed in a satisfactory fashion, while if it is less than 5 ppm by mass, the necessary reaction temperature is lower and the aromatic hydrogenation reaction does not proceed in a satisfactory fashion. The "sulfur content" through the present specification is the sulfur content by mass based on the total gas oil fraction, measured according to the method described in JIS K 2541, "Crude oil and petroleum products-Determination of sulfur content" or ASTM-D5453.

The total aromatic content of the feed oil used for the invention is 10-25 % by volume, and preferably 11-20 % by volume. If the total aromatic content of the feed oil is greater than 25 % by volume, a long contact time, or an excessively large reactor volume, will be required to achieve a total aromatic content of not greater than 1 % by volume, thereby increasing equipment investment costs, while if it is less than 10 % by volume the operating conditions necessary for aromatic hydrogenation will be in excess over desulfurization, thereby reducing the economic advantage of the invention.

The aromatic composition of the feed oil of the invention is preferably a monocyclic aromatic content of 9-18 % by volume and a bicyclic or greater aromatic content of 1-7 % by volume, and more preferably a monocyclic aromatic content of 10.5-15 % by volume and a bicyclic or greater aromatic content of 1.5-5 % by volume. If the monocyclic aromatic content and bicyclic or greater aromatic content of the feed oil are above the aforementioned upper limits, a large equipment investment tends to be needed to achieve the total aromatic content of not greater than 1 % by volume and the bicyclic or greater aromatic content of not greater than 0.2 % by volume, while if they are below the aforementioned lower limits, the operating conditions necessary for aromatic hydrogenation will be in excess over desulfurization, thereby reducing the economic advantage of the invention.

The total aromatic content, monocyclic aromatic content and bicyclic or greater aromatic content throughout the present specification are the volume percentages (% by volume) for the respective aromatic contents as measured according to the method described in JPI-5S-49-97, "Petroleum products-Determination of hydrocarbon types-High performance liquid chromatography", in *Index on Testing Method for Petroleum Products* published by The Japan Petroleum Institute.

From the viewpoint of maintaining fuel oil density of the gas oil product to improve fuel consumption, the composition other than the aromatic portion of the feed oil of the invention preferably includes a paraffin content of 30-60 % by volume, a naphthene content of 25-60 % by volume and an olefin content of not greater than 1 % by volume. The naphthene content, paraffin content and olefin content throughout the present specification are the respective volume percentages (% by volume) as measured according to the method described in ASTM D2786-91, "Standard Test Method for Hydrocarbon Types Analysis of Gas-Oil Saturates Fractions by High Ionizing Voltage Mass Spectrometry".

According to the invention, a feed oil (hydrorefined oil) having a sulfur content, total aromatic content and boiling point range in prescribed ranges is subjected to hydrotreatment in the presence of a hydrogenation catalyst to obtain an ultralow sulfur and low aromatic gas oil fraction having a sulfur content of not greater than 1 ppm by mass and a total aromatic content of not greater than 1 % by volume.

According to the invention, hydrotreatment of the feed oil is carried out in the presence of a hydrogenation catalyst, and the catalyst used for the hydrotreatment is preferably one comprising a hydrogenation-active metal supported on a porous support. As porous supports there are preferred supports composed of alumina and at least one substance selected from the group consisting of titania, zirconia, boria, silica, phosphorus and zeolite. The production method is not particularly restricted, and any preparation method may be employed which uses materials of these elements in the form of various sols or salt compounds. Alternatively, a compound hydroxide or compound oxide such as silica-alumina, silica-zirconia, alumina-titania, silica-titania, alumina-boria or the like may be prepared first, and then added into the form of an alumina gel or a hydroxide, or in the form of an appropriate solution. The alumina and other components may be present in any desired proportion in the porous support, but the alumina content is preferably not greater than 90%, more preferably not greater than 60% and even more preferably not greater than 40%. The lower limit for the alumina content is not particularly restricted, but the alumina content is preferably at least 20 % by mass.

Zeolite is a crystalline aluminosilicate, of which there may be mentioned faujasite, pentasil and mordenite, and the alumina content of the zeolite may be adjusted during zeolite synthesis, or the zeolite may be ultrastabilized by a prescribed hydrothermal treatment and/or acid treatment. Faujasite, beta and mordenite are preferred, with Y-types and beta-types being especially preferred. Ultrastabilization is particularly preferred when using Y-zeolite; zeolite which has been ultrastabilized by hydrothermal treatment is preferred because it has newly formed fine pores in the range of 20-100 A in addition to its inherent fine porous structure (micropores) of 20 A and smaller. The hydrothermal treatment conditions applied may be conditions which are publicly known.

The active metal of the catalyst used for hydrogenation is preferably at least one metal selected from among Group 8 metals, more preferably at least one selected from the group consisting of Ru, Rd, Ir, Pd and Pt, and even most preferably Pd and/or Pt. The active metal used may also consist of a combination of two or more of these metals, and for example, the combinations Pt-Pd, Pt-Rh, Pt-Ru, Ir-Pd, Ir-Rh, Ir-Ru, Pt-Pd-Rh, Pt-Rh-Ru, Ir-Pd-Rh and Ir-Rh-Ru may be used. As metal sources there may be used ordinary inorganic salts and chelated salt compounds, and the loading method may be any loading method ordinarily used with hydrogenation catalysts, such as impregnation or ion-exchange methods. For loading of different metals onto the porous support, a mixed solution may be used for simultaneous loading, or single solutions may be used for successive loading. The metal salt solution may be in the form of an aqueous solution or an organic solvent solution.

The loading of the metal onto the porous support may be carried out after completion of the entire preparation step for the porous support, or alternatively the metal may be loaded onto an appropriate oxide, compound oxide or zeolite in an intermediate step of the porous support preparation, and the loading followed by steps such as gel preparation, heat concentration, kneading and the like.

There are no particular restrictions on the loading weight of the active metal for the catalyst used for hydrogenation, but the total amount of metals with respect to the catalyst weight is preferably 0.1-10 % by mass, more preferably 0.15-5 % by mass and even more preferably 0.2-3 % by mass.

The catalyst used for the hydrotreatment according to the invention is preferably used after pre-reduction treatment under a hydrogen stream. Specifically, by circulating a hydrogen-containing gas to a reaction tube packed with the hydrogenation catalyst and supplying heat according to a prescribed procedure to 200°C or above, it is usually possible to reduce the active metal on the catalyst to exhibit hydrogenation activity.

The conditions for hydrotreatment according to the invention are preferably a reaction temperature of 170-320°C, a hydrogen partial pressure of 2-10 MPa, a liquid hourly space velocity (LHSV) of 0.1-2 h⁻¹ and a hydrogen/oil ratio of 100-800 NL/L, more preferably a reaction temperature of 175-310°C, a hydrogen partial pressure of 2.5-8 MPa, a liquid hourly space velocity (LHSV) of 0.2-1.5 h⁻¹ and a hydrogen/oil ratio of 150-600 NL/L, and most preferably a reaction temperature of 180-300°C, a hydrogen partial pressure of 3-7 MPa, a liquid hourly space velocity (LHSV) of 0.3-1.2 h⁻¹ and a hydrogen/oil ratio of 150-500 NL/L. A lower reaction temperature will favor the hydrogenation reaction, but if the reaction temperature is below the aforementioned lower limit the desulfurization reaction may not adequately proceed, while if the reaction temperature is above the aforementioned upper limit the aromatic production reaction may not be favored. Also, a higher hydrogen partial pressure and hydrogen/oil ratio will tend to promote both the desulfurization and hydrogenation reactions, and if the hydrogen partial pressure and hydrogen/oil ratio are below the aforementioned lower limits the desulfurization and aromatic hydrogenation reactions may not proceed sufficiently; however, if the hydrogen partial pressure and hydrogen/oil ratio are above the aforementioned upper limits a large equipment investment may be necessitated. A lower liquid hourly space velocity (LHSV) will tend to favor the desulfurization and hydrogenation reactions, but if the liquid hourly space velocity is below the aforementioned lower limit an extremely large reactor volume will be required, tending to result in a large equipment investment, while if the liquid hourly space velocity is above the aforementioned upper limit, the desulfurization and aromatic hydrogenation reactions may not proceed sufficiently.

The apparatus for hydrotreatment of the hydrorefined feed oil may have any construction, with either a single reactor or a plural reactors, and the apparatus may be provided with devices for gas-liquid separation or hydrogen sulfide removal, or additional hydrogen may be injected, at a pre-stage of the reactor or between different columns, for the purpose of lowering the hydrogen sulfide concentration in the reactor.

The reaction system of the hydrotreatment apparatus is preferably a fixed-bed system. The hydrogen flow system may be in cocurrent or countercurrent with the feed oil, or a system with a combination of cocurrent and countercurrent may be employed with a plural reactors. An ordinary flow system is a downflow type, which may be a gas-liquid cocurrent system. The reactor may be composed of a plural catalyst beds, and hydrogen gas may be injected between catalyst beds as quench gas, for the purpose of reaction heat removal or hydrogen partial pressure increase.

Thus, according to the invention the aforementioned feed oil having prescribed properties is hydrotreated in the presence of a hydrogenation catalyst, so that the ultralow sulfur and low aromatic gas oil fraction of the invention having a sulfur content of not greater than 1 ppm by mass and a total aromatic content of not greater than 1 % by volume is efficiently and reliably obtained without provision of special operating conditions or equipment investment.

Although the reason for which such a ultralow sulfur and low aromatic gas oil fraction is obtained by the process of the invention is not fully understood, the present inventors conjecture as follows. That is, typical sulfur compounds present in petroleum-based hydrocarbon gas oil fractions have the structure of dibenzothiophene derivatives. Among these, derivatives having substituents at the 4,6-position next to the sulfur atom have very low reactivity due to steric hindrance. Thus, since sulfur residue remains even with increased severity of hydrodesulfurization, it is very difficult to achieve a sulfur content of not greater than 1 ppm by mass and an aromatic content of not greater than 1 % by volume by direct hydrotreatment of the feed oil, but a fraction which has been hydrorefined to a sulfur content of 5-15 ppm by mass is used for the hydrotreatment so that the desulfurization reaction proceeds in a surprisingly efficient manner. This is possible because of fewer sulfur compounds that are partly responsible for reduced activity of the hydrogenation catalyst, and as a result a higher desulfurization reaction rate is achieved. Also, even though hydrorefined oil which has been desulfurized to a sulfur content of 5-15 ppm by mass still contains residual aromatic components at 10-25 % by volume, the low sulfur compound level in the feed oil helps promote the aromatic hydrogenation reaction simultaneously with the desulfurization reaction. Consequently, it is the conjecture of the present inventors that carrying out hydrotreatment of the feed oil with the aforementioned prescribed properties according to the invention makes it possible to simultaneously achieve a sulfur content of not greater than 1 ppm by mass and a total aromatic content of not greater than 1 % by volume, as a feature which has not been possible by the prior art.

The ultralow sulfur and low aromatic gas oil fraction of the invention corresponds to an ultra-clean diesel fuel with a sulfur content of not greater than 1 ppm by mass and a total aromatic content of not greater than 1 % by volume, obtained by the aforementioned process of the invention. Such an ultralow sulfur and low aromatic gas oil fraction can adequately prevent production of particulate matter in diesel vehicle exhaust gas, while extending the usable life of the exhaust gas purification device without reducing fuel consumption.

The bicyclic or greater aromatic content of the ultralow sulfur and low aromatic gas oil fraction of the invention can be reduced to not greater than 0.2 % by volume, with the remaining aromatic components consisting entirely of monocyclic aromatic components. Thus, the ultralow sulfur and low aromatic gas oil fraction of the invention preferably has a very low residue of bicyclic or greater aromatic components as well as a low total aromatic component content, because a bicyclic or greater aromatic content of greater than 0.2 % by volume is undesirable from the standpoint of preventing production of particulate matter.

The aromatic components are converted to naphthenes and paraffins during the hydrotreatment of the invention, but most are converted to naphthenes. From the viewpoint of reducing environmental load and maintaining fuel oil density, i.e. fuel consumption, the composition other than the aromatic portion of the ultralow sulfur and low aromatic gas oil fraction of the invention preferably includes a paraffin content of 30-60 % by volume, a naphthene content of 40-70 % by volume and an olefin content of not greater than 1 % by volume.

The ultralow sulfur and low aromatic gas oil fraction described above may be used alone as a diesel fuel, but other components such as fuel stocks may be added to the ultralow sulfur and low aromatic gas oil fraction as a gas oil composition to be used as a diesel fuel according to the invention. That is, a gas oil composition according to the invention is characterized by comprising an ultralow sulfur and low aromatic gas oil fraction having a sulfur content of not greater than 1 ppm by mass and a total aromatic content of not greater than 1 % by volume, obtained by the aforementioned process of the invention. Even when a gas oil composition of the invention is used as a diesel fuel, the excellent properties of the ultralow sulfur and low aromatic gas oil fraction of the invention allow fuel consumption to be maintained while adequately preventing particulate matter in diesel vehicle exhaust gas, and easily extending the usable life of the exhaust gas purification device.

Other fuel stocks which may be included in gas oil composition of the invention include gas oil bases and kerosene bases other than the ultralow sulfur and low aromatic gas oil fraction of the invention, and more specifically, there may be combined straight-run gas oil, vacuum gas oil, hydrodesulfurized gas oil, hydrocracked gas oil, straight-run kerosene, hydrocracked kerosene and the like, as well as synthetic gas oils or synthetic kerosenes obtained by Fisher-Tropsch reaction and related reactions using as the starting material "synthetic gas" composed of hydrogen and carbon monoxide. These synthetic kerosenes or synthetic gas oils are characterized by consisting primarily of saturated hydrocarbons, with virtually no aromatic components. The process for production of a synthetic gas may be any publicly known process, and is not particularly restricted. The synthetic gas oil content is preferably not greater than 30 % by volume, more preferably not greater than 20 % by volume and even more preferably not greater than 10 % by volume of the gas oil composition. The synthetic kerosene content is preferably not greater than 60 % by volume, more preferably not greater than 50 % by volume and even more preferably not greater than 40 % by volume of the gas oil composition.

The ultralow sulfur and low aromatic gas oil fraction of the invention may be used not only as a diesel fuel, but also as the base oil for a solvent such as an ink solvent, cleaning solvent, insecticide solvent, aerosol solvent, solution or suspension polymerization solvent, degreasing agents, lacquer solvent, washing solvent, extraction solvent or paint solvent, or as a rubber solvent, metal part cleaning solvent, oil for metal working such as aluminum rolling, rustproofing oil, car coating solvent or the like.

### [Examples]

The present invention will now be explained in greater detail through examples and comparative examples, with the understanding that these examples are in no way limitative on the invention.

### (Example 1)

After gelling an aqueous sodium silicate solution (29 % by mass of concentration, 2350 g) at pH 14, it was heated for 2 hours at pH 7, and then an aqueous solution containing zirconium sulfate (tetrahydrate, 350 g) was added to the obtained slurry and the pH of the slurry was adjusted to pH 7 to produce a silica-zirconia compound hydroxide. After then maturing for 30 minutes, an aqueous solution containing aluminum sulfate (tertradecahydrate, 420 g) was added to adjust the pH to 7, to produce a silica-zirconia-alumina compound hydroxide. The silica-zirconia-alumina compound hydroxide was filtered out of the slurry and washed, and after adjusting the moisture content by heated concentration, it was subjected to extrusion molding, drying and firing to obtain a catalyst support (porous support). The proportions of each of the constituent components in the obtained support, in terms of oxides, were 20 % by mass of alumina, 57 % by mass of silica and 23 % by mass of zirconia.

A mixed aqueous solution containing tetraamineplatinum (II) chloride and tetraaminepalladium (II) chloride adjusted to a concentration for a volume corresponding to the water absorption of the support, was used to impregnate the metals into the support, and this was followed by drying and firing to obtain hydrogenation catalyst 1. The platinum and palladium loading weights for catalyst 1 were 0.3 % by mass and 0.5 % by mass, respectively, with respect to the total catalyst.

Next, catalyst 1 (55.2 g) was packed into a reaction tube with an inner diameter of 20 mm, and after fitting it into a fixed-bed circulating reactor, reduction pretreatment was carried out as treatment prior to the reaction, under conditions with a hydrogen partial pressure of 5 MPa and 300°C. Feed oil A exhibiting the properties shown in Table 2 was then used under the conditions shown in Table 1, for a hydrotreatment test.

Feed oil A was a hydrorefined gas oil-corresponding fraction (primary feed oil) obtained by atmospheric pressure distillation of Middle Eastern crude oil, having a sulfur content of 11.0 ppm by mass and a total aromatic content of 17.9 % by volume. In Table 2, IBP is the initial boiling point as defined by JIS K2254, and EP is the end point as defined by JIS K2254.

The sulfur content of the product oil obtained by the 10th day after start of the hydrotreatment test was 0.5 ppm by mass, and the total aromatic content was 0.6 % by volume. The properties of the product oil are shown in Table 2. The sulfur content of the product oil obtained by the 30th day after start of the hydrotreatment test was 0.8 ppm by mass.

**Table 1**

| | |
|---|---|
| Hydrogen partial pressure | 5.0 MPa |
| LHSV | 1.0 h⁻¹ |
| Hydrogen/oil ratio | 422 NL/L |
| Reaction temperature | 230°C |

**Table 2**

| | | Example 1 | Example 2 | | Comp. Ex.1 |
|---|---|---|---|---|---|
| | Feed oil A | (Product oil) | (Product oil) | Feed oil B | (Product oil) |
| Sulfur content ppm by mass | 11.0 | 0.5 | 0.2 | 25.3 | 4.9 |
| Nitrogen content ppm by mass | <3 | <3 | <3 | <3 | <3 |
| IBP °C | 188 | 185 | 186 | 190 | 189 |
| EP °C | 369 | 365 | 368 | 367 | 368 |
| Saturation % by volume | 82.1 | 99.3 | 99.7 | 80.5 | 95.5 |
| Paraffins % by volume | 43.4 | 46.1 | 45.8 | 42.5 | 44.4 |
| Naphthenes % by volume | 38.7 | 53.2 | 53.9 | 38.0 | 51.1 |
| Olefins % by volume | 0.0 | 0.1 | 0.1 | 0.0 | 0.0 |
| Aromatic components % by volume | 17.9 | 0.6 | 0.2 | 19.5 | 4.5 |
| Monocyclic % by volume | 15.7 | 0.5 | 0.2 | 17.0 | 4.2 |
| Polycyclic % by volume | 2.2 | 0.1 | 0.0 | 2.5 | 0.3 |

### (Example 2)

Y-type zeolite having a SiO₂/Al₂O₃ ratio of 5 was stabilized by a publicly known ultrastabilization treatment method, and then acid treated with 1N aqueous nitric acid to obtain proton-form stabilized Y-type zeolite having a unit lattice length of 24.28 Å and a SiO₂/Al₂O₃ ratio of 91. The obtained stabilized Y-type zeolite (550 g) was added to an aqueous ammonium nitrate solution (2N concentration, 3 liters), and the mixture was stirred at room temperature for conversion to the ammonium form. The obtained ammonium-zeolite was then added to a mixed solution containing tetraamineplatinum (II) chloride and tetraaminepalladium (II) chloride adjusted to a concentration for a volume corresponding to the water absorption of the support, and then the mixture was stirred at 70°C and an ion-exchange method was carried out for metal loading. After metal loading, the zeolite was separated out by filtration and dried and fired. The obtained zeolite was kneaded with a commercially available alumina gel (Condea Co., Ltd.) and molded to obtain hydrogenation catalyst 2. The platinum and palladium loading weights for catalyst 2 were 0.3 % by mass and 0.5 % by mass, respectively, with respect to the total catalyst. The zeolite and alumina ratio was 70:30 by mass.

A hydrotreatment test was then carried out in the same manner as Example 1, except for using catalyst 2. The sulfur content of the product oil obtained by the 10th day after start of the hydrotreatment test was 0.2 ppm by mass, and the total aromatic content was 0.2 % by volume. The properties of the product oil are shown in Table 2.

### (Comparative Example 1)

A hydrotreatment test was then carried out in the same manner as Example 1, except for using feed oil B exhibiting the properties shown in Table 2. Feed oil B was a hydrorefined gas oil-corresponding fraction (crude oil) obtained by atmospheric pressure distillation of Middle Eastern crude oil, having a sulfur content of 25.3 ppm by mass and a total aromatic content of 19.5 % by volume.

The sulfur content of the product oil obtained by the 10th day after start of the hydrotreatment test was 4.9 ppm by mass, and the total aromatic content was 4.5 % by volume. The properties of the product oil are shown in Table 2. The sulfur content of the product oil obtained by the 30th day after start of the hydrotreatment test was 7.2 ppm by mass.

Clearly from the results shown in Table 2, it was confirmed that the strict conditions of a sulfur content of not greater than 1 ppm by mass and a total aromatic content of not greater than 1 % by volume can be simultaneously achieved by hydrotreatment using a feed oil obtained by hydrorefining of primary feed oil to adequately remove the sulfur and aromatic components and reduce their contents to within the ranges according to the invention (Examples 1 and 2). Furthermore, based on comparison of Example 1 and Comparative Example 1 it has been demonstrated that the sulfur content of the feed oil is a particularly important factor, and that activity stability is not a problem.

### Industrial Applicability

As explained above, the present invention allows production of a gas oil fraction having a sulfur content of not greater than 1 ppm by mass and a total aromatic content of not greater than 1 % by volume, and with excellent environmental properties, in an efficient and reliable manner without provision of special operating conditions or equipment investment.

## Claims

1. A gas oil fraction hydrotreatment process **characterized by** using a hydrorefined petroleum-based hydrocarbon oil with a sulfur content of 5-15 ppm by mass, a total aromatic content of 10-25 % by volume and a boiling point range of 150-380°C as the feed oil and subjecting said feed oil to hydrotreatment in the presence of a hydrogenation catalyst to obtain an ultralow sulfur and low aromatic gas oil fraction having a sulfur content of not greater than 1 ppm by mass and a total aromatic content of not greater than 1 % by volume.

2. A gas oil fraction hydrotreatment process according to claim 1, **characterized in that** said feed oil has a monocyclic aromatic content of 9-18 % by volume and a bicyclic or greater aromatic content of 1-7 % by volume, and said ultralow sulfur and low aromatic gas oil fraction has a bicyclic or greater aromatic content of not greater than 0.2 % by volume.

3. A gas oil fraction hydrotreatment process according to claim 1 or 2, **characterized in that** the reaction conditions for said hydrotreatment are a reaction temperature of 170-320°C, a hydrogen partial pressure of 2-10 MPa, a liquid hourly space velocity of 0.1-2 h⁻¹ and a hydrogen/oil ratio of 100-800 NL/L.

4. A gas oil fraction hydrotreatment process according to any one of claims 1 to 3, **characterized in that** said feed oil has a paraffin content of 30-60 % by volume and a naphthene content of 25-60 % by volume, while said ultralow sulfur and low aromatic gas oil fraction has a paraffin content of 30-60 % by volume and a naphthene content of 40-70 % by volume.

5. A gas oil fraction hydrotreatment process according to any one of claims 1 to 4, **characterized in that** said hydrogenation catalyst is one having at least one kind of active metal from among Group 8 metals supported on a porous support.

6. A gas oil fraction hydrotreatment process according to claim 5, **characterized in that** said porous support is composed of alumina and at least one substance selected from the group consisting of titania, zirconia, boria, silica, phosphorus and zeolite.

7. A gas oil fraction hydrotreatment process according to claim 5 or 6, **characterized in that** said active metal is at least one kind of metal selected from the group consisting of Ru, Rd, Ir, Pd and Pt.

8. An ultralow sulfur and low aromatic gas oil fraction having a sulfur content of not greater than 1 ppm by mass and a total aromatic content of not greater than 1 % by volume, **characterized by** being obtained by a process according to any one of claims 1 to 7.

9. A gas oil composition **characterized by** comprising an ultralow sulfur and low aromatic gas oil fraction having a sulfur content of not greater than 1 ppm by mass and a total aromatic content of not greater than 1 % by volume, and obtained by a process according to any one of claims 1 to 7.
